# EUROPEAN PATENT APPLICATION

(11) **EP 4 807 805 A1**
(43) Date of publication of application: **16.09.2026**
(21) Application number: 24890011.0
(22) Date of filing: 16.05.2024
(51) Int. Cl.: H01M 4/36, H01M 4/62, H01M 10/054

(54) **NEGATIVE ELECTRODE SLURRY AND PREPARATION METHOD THEREFOR, NEGATIVE ELECTRODE SHEET, SODIUM SECONDARY BATTERY, AND ELECTRIC DEVICE**

(30) Priority: 15.11.2023 CN 202311524591
(71) Applicant: Contemporary Amperex Technology Co., Limited, Ningde, Fujian 352100 (CN)
(72) Inventor: WU, Kai, Ningde, Fujian 352100 (CN); ZHOU, Yi, Ningde, Fujian 352100 (CN); ZHANG, Ming, Ningde, Fujian 352100 (CN)
(74) Representative: Ziebig Hengelhaupt Intellectual Property Attorneys Patentanwaltskanzlei PartGmbB
(86) International application number: PCT/CN2024/093681
(87) International publication number: WO 2025/102640

(57) **Abstract**

A negative electrode slurry and a preparation method therefor, a negative electrode sheet, a sodium secondary battery, and an electric device. The negative electrode slurry comprises a negative electrode active material and a modifier that coats the surface of the negative electrode active material. The negative electrode active material comprises one or more of hard carbon and graphite coated with hard carbon. The modifier comprises carboxymethyl cellulose salt having a weight-average molecular weight of 20,000-150,000. The negative electrode slurry exhibits a low occurrence degree of gelation and foaming, and can improve the processing performance and the storage performance of the sodium secondary battery.

## Description

### CROSS-REFERENCE TO RELATED APPLICATIONS

The present application claims priority to Chinese Patent Application No.202311524591.8 filed on November 15, 2023, entitled "NEGATIVE ELECTRODE SLURRY AND PREPARATION METHOD THEREFOR, NEGATIVE ELECTRODE SHEET, SODIUM SECONDARY BATTERY, AND ELECTRIC DEVICE", which is incorporated herein by reference in its entirety.

### TECHNICAL FIELD

The present application relates to the technical field of sodium batteries, and particularly relates to a negative electrode slurry and a preparation method thereof, a negative electrode sheet, a sodium secondary battery, and an electric device.

### BACKGROUND

In recent years, secondary batteries have been widely used in energy storage power systems such as hydroelectric power plants, thermal power plants, wind power plants, and solar power plants, and many other fields including electric tools, electric bicycles, electric motorcycles, electric vehicles, military equipment, and aerospace.

Compared with lithium secondary batteries, sodium secondary batteries have greater competitive advantages due to the abundance resources and wide distribution of sodium. However, due to limitations in the preparation process of sodium secondary batteries, such as the occurrence of gelation and foaming during the preparation of negative electrode slurry, sodium secondary batteries cannot be mass-produced to meet market demands.

### SUMMARY

The present application is made in view of the above problems, and aims to provide a negative electrode slurry, intended to improve gelation and foaming of the negative electrode slurry, so as to enhance processability and storage performance of the sodium secondary battery.

According to a first aspect of the present application, a negative electrode slurry for a sodium secondary battery is provided. The negative electrode slurry includes a negative electrode active material and a modifying agent coated on a surface of the negative electrode active material, the negative electrode active material includes one or more of hard carbon and hard carbon-coated graphite, and the modifying agent includes a carboxymethyl cellulose salt having a weight average molecular weight of 20000 to 150000.

Compared with sodium carboxymethyl cellulose having a weight average molecular weight greater than 300000, the modifying agent containing a carboxymethyl cellulose salt having a weight average molecular weight of 20000 to 150000 has improved chain extensibility and lower steric hindrance in the negative electrode slurry due to its reduced molecular weight, which is beneficial for coating between the modifying agent and hard carbon. In other words, the modifying agent containing a carboxymethyl cellulose salt having a weight average molecular weight of 20000 to 150000 may form strong intermolecular interactions with sp² hybridized C-C bonds on the surface of hard carbon through the main chain, so that the modifying agent is coated on the surface of hard carbon. The coating structure formed by the modifying agent and hard carbon facilitates regulation of the pore distribution of hard carbon, and reduces the probability of water molecules in the negative electrode slurry entering the pores of hard carbon, thereby reducing the degree of foaming of the negative electrode slurry. More importantly, side chains of the modifying agent containing the carboxymethyl cellulose salt having a weight average molecular weight of 20000 to 150000 may bind with oxygen-containing functional groups on the surface of hard carbon, thereby reducing the degree of gelation of the negative electrode slurry caused by a crosslinked structure formed by the binding of side chains of sodium carboxymethyl cellulose having a weight average molecular weight greater than 300000 with oxygen-containing functional groups on the surface of hard carbon. Moreover, side chains of carboxymethyl cellulose salt coated on the surface of hard carbon may also form a space charge layer, which is beneficial for increasing the repulsion between hard carbon particles, thereby reducing the degree of gelation of the negative electrode slurry caused by the aggregation of hard carbon particles, improving processability of the negative electrode slurry, increasing the yield, and facilitating the mass production of sodium secondary batteries. In addition, this is beneficial for improving storage performance and cycling performance of sodium secondary batteries.

In any embodiment, the modifying agent includes a carboxymethyl cellulose salt having a weight average molecular weight of 40000 to 100000.

Further controlling the weight average molecular weight of carboxymethyl cellulose salt in the modifying agent to be 40000 to 100000 is beneficial for further improving processability of the negative electrode slurry, as well as improving cycling performance and storage performance of the sodium secondary battery.

In any embodiment, the carboxymethyl cellulose salt includes one or more of lithium carboxymethyl cellulose, sodium carboxymethyl cellulose, potassium carboxymethyl cellulose, rubidium carboxymethyl cellulose, and cesium carboxymethyl cellulose.

In any embodiment, a mass ratio of the modifying agent to the negative electrode active material is 0.001 to 0.011, optionally 0.002 to 0.0065.

Controlling the mass ratio of the modifying agent to the negative electrode active material within an appropriate range is beneficial for providing sufficient modifying agent coated on the surface of hard carbon to form a coating structure, improving the gelation and foaming of the negative electrode slurry, and also reducing the impact on battery performance caused by an excessively thick coating layer on the surface of hard carbon due to the excessive proportion of the modifying agent.

In any embodiment, based on a total mass of solids in the negative electrode slurry, a mass content of the modifying agent is 0.1% to 1%, optionally 0.2% to 0.6%.

In any embodiment, based on the total mass of solids in the negative electrode slurry, a mass content of the negative electrode active material is 92% to 97%, optionally 92% to 95%.

Controlling the mass content of the modifying agent within an appropriate range can provide sufficient modifying agent coated on the surface of hard carbon to form a coating structure, and reduce the impact on battery performance caused by an excessively thick coating layer on the surface of hard carbon due to the excessive mass content of the modifying agent.

Controlling the mass content of the negative electrode active material within an appropriate range provides sufficient sodium insertion sites so that the sodium secondary battery has high capacity.

In any embodiment, the solid content of the negative electrode slurry is 45% to 55%, optionally 48% to 53%.

Controlling the negative electrode slurry within an appropriate range enables the negative electrode slurry to have a certain fluidity for subsequent processing.

In any embodiment, the negative electrode slurry further includes at least one of a conductive agent, a dispersant, a binder, and a plasticizer.

In any embodiment, the conductive agent includes one or more of Super P, Ketjenblack, acetylene black, carbon nanotubes, and graphene, optionally including Super P; and/or
the dispersant includes sodium carboxymethyl cellulose having a weight average molecular weight of 400000 to 1000000; and/or
the binder includes one or more of styrene-butadiene rubber, polyacrylic acid, polyacrylate, polyamide, poly(acrylonitrile-acrylate), and poly(styrene-acrylate), optionally including styrene-butadiene rubber; and/or
the plasticizer includes 1,3-butanediol.

Sodium carboxymethyl cellulose having a weight average molecular weight of 400000 to 1000000 as a dispersant is beneficial for improving the dispersion uniformity of the negative electrode slurry and improving processability of the negative electrode slurry. The above conductive agent and binder may make the negative electrode sheet prepared using the negative electrode slurry have excellent conductivity and adhesion. The above plasticizer may make the negative electrode sheet prepared using the negative electrode slurry have excellent toughness and reduce cracking of the negative electrode sheet.

In any embodiment, a bubble volume per unit mass of hard carbon in the negative electrode slurry is not more than 2.5 ml/g.

The negative electrode slurry with a low degree of foaming can improve processability of the negative electrode sheet and is beneficial for improving storage performance and cycling performance of the sodium secondary battery.

In any embodiment, a viscosity change of the negative electrode slurry after being placed at 25°C for 48 hours is 3000 mPa·s to 12000 mPa·s.

The viscosity change of the negative electrode slurry after being placed at 25°C for 48 hours is 3000 mPa·s to 12000 mPa·s, and its gelation is significantly suppressed, which is beneficial for subsequent processing of the negative electrode slurry, as well as improving storage performance and cycling performance of the sodium secondary battery.

According to a second aspect of the present application, a preparation method for a negative electrode slurry is provided, including: coating a modifying agent on a surface of a negative electrode active material to obtain an adhesive mixture; and dispersing the adhesive mixture in a solvent to prepare the negative electrode slurry; where the negative electrode active material includes hard carbon and/or hard carbon-coated graphite, the modifying agent includes a carboxymethyl cellulose salt having a weight average molecular weight of 20000 to 150000, and the carboxymethyl cellulose salt includes one or more of lithium carboxymethyl cellulose, sodium carboxymethyl cellulose, potassium carboxymethyl cellulose, rubidium carboxymethyl cellulose, and cesium carboxymethyl cellulose.

Coating the modifying agent on the surface of the negative electrode active material can effectively reduce the degree of gelation of the negative electrode slurry. Specifically, the modifying agent containing a carboxymethyl cellulose salt having a weight average molecular weight of 20000 to 150000 has higher chain extensibility in the negative electrode slurry, which is beneficial for the coating between the modifying agent and hard carbon. Accordingly, the coating structure formed by the modifying agent and hard carbon facilitates regulation of the pore distribution of hard carbon, and reduces the probability of water molecules in the negative electrode slurry entering the pores of hard carbon, thereby mitigating the degree of foaming of the negative electrode slurry. Furthermore, side chains of the modifying agent containing a carboxymethyl cellulose salt having a weight average molecular weight of 20000 to 150000 may bind with oxygen-containing functional groups on the surface of hard carbon, thereby reducing the degree of gelation of the negative electrode slurry caused by a crosslinked structure formed by the binding of side chains of the dispersant with oxygen-containing functional groups on the surface of hard carbon. Moreover, side chains of carboxymethyl cellulose salt coated on the surface of hard carbon may also form a space charge layer, which is beneficial for increasing the repulsion between hard carbon particles, thereby reducing the degree of gelation of the negative electrode slurry caused by the aggregation of hard carbon particles, improving processability of the negative electrode slurry, increasing yield, and facilitating mass production of sodium secondary batteries. In addition, this is beneficial for improving storage performance and cycling performance of sodium secondary batteries.

In any embodiment, coating the modifying agent on the surface of the negative electrode active material specifically includes: kneading a raw material containing the negative electrode active material with the modifying agent in a solvent to obtain the adhesive mixture. By kneading the negative electrode active material with the modifying agent in the solvent in advance, the modifying agent can be effectively coated on the surface of the negative electrode active material, thereby increasing the coating coverage.

In any embodiment, a kneading time is 30 min to 120 min, optionally 40 min to 80 min.

Controlling the kneading time within an appropriate range is beneficial for forming a coating structure between the modifying agent and hard carbon, suppressing foaming and gelation of the negative electrode slurry, enhancing processability of the negative electrode slurry, and improving storage performance and cycling performance of the sodium secondary battery.

In any embodiment, a solid content of the adhesive mixture is 60% to 68%, optionally 60% to 65%.

In any embodiment, the preparation method specifically includes:
stirring and mixing a conductive agent, a negative electrode active material, and a modifying agent to obtain a dry mixture;
kneading the dry mixture in a solvent to obtain an adhesive mixture;
stirring and mixing the adhesive mixture, a dispersant, and a solvent to obtain a first adhesive solution; and
stirring and mixing the first adhesive solution with a plasticizer, and adding a binder and stirring uniformly to obtain the negative electrode slurry.

The above preparation method may significantly suppress foaming and gelation of the negative electrode slurry, enhance processability of the negative electrode slurry, and improve storage performance and cycling performance of the sodium secondary battery.

According to a third aspect of the present application, a negative electrode sheet is provided, where the negative electrode sheet includes a negative electrode active material and a modifying agent coated on a surface of the negative electrode active material, the negative electrode active material includes hard carbon and/or hard carbon-coated graphite, the modifying agent includes a carboxymethyl cellulose salt having a weight average molecular weight of 20000 to 150000, and the carboxymethyl cellulose salt includes one or more of lithium carboxymethyl cellulose, sodium carboxymethyl cellulose, potassium carboxymethyl cellulose, rubidium carboxymethyl cellulose, and cesium carboxymethyl cellulose.

The negative electrode sheet has good quality and stability, which is beneficial for improving processability, storage performance, and cycling stability of the sodium secondary battery.

According to a fourth aspect of the present application, a sodium secondary battery is provided, including the negative electrode sheet of the third aspect of the present application, or including a negative electrode sheet prepared using the negative electrode slurry of the first aspect of the present application or a negative electrode slurry prepared by the preparation method of the second aspect of the present application.

According to a fifth aspect of the present application, an electric device is provided, including the sodium secondary battery of the fourth aspect of the present application.

### BRIEF DESCRIPTION OF DRAWINGS

FIG. 1 is a schematic diagram of a gelation mechanism of a negative electrode slurry;
FIG. 2 is an optical microscope image after coating of a negative electrode slurry;
FIG. 3 is a schematic diagram of a coating structure formed by a modifying agent and hard carbon according to an embodiment of the present application;
FIG. 4 is a schematic diagram of bonding between a modifying agent and hard carbon according to an embodiment of the present application;
FIG. 5 is a schematic diagram showing classification results of a gelation state test of a negative electrode slurry after storage at 25°C for 48 hours according to an embodiment of the present application;
FIG. 6 is a schematic diagram of a sodium secondary battery according to an embodiment of the present application;
FIG. 7 is an exploded view of the sodium secondary battery shown in FIG. 6 according to an embodiment of the present application;
FIG. 8 is a schematic diagram of a battery module according to an embodiment of the present application;
FIG. 9 is a schematic diagram of a battery pack according to an embodiment of the present application;
FIG. 10 is an exploded view of the battery pack according to an embodiment of the present application shown in FIG. 9; and
FIG. 11 is a schematic diagram of an electric device using a sodium secondary battery as a power source according to an embodiment of the present application.

### Description of reference signs:

1 battery pack; 2 upper enclosure; 3 lower enclosure; 4 battery module; 5 sodium secondary battery; 51 housing; 52 electrode assembly; and 53 cover plate.

### DESCRIPTION OF EMBODIMENTS

Hereinafter, embodiments specifically disclosing a negative electrode slurry and preparation method therefor, a negative electrode sheet, a sodium secondary battery, and an electric device of the present application will be described in detail with appropriate reference to the accompanying drawings. However, an unnecessary detailed description may be omitted. For example, a detailed description of well-known matters and repeated descriptions of a substantially same structure may be omitted. This is to avoid the following descriptions from becoming unnecessarily redundant and to facilitate understanding by those skilled in the art. The accompanying drawings and the following descriptions are provided for those skilled in the art to fully understand the present application, and are not intended to limit subject matters described in the claims.

The "range" disclosed in the present application is limited in the form of a lower limit and an upper limit. A given range is limited by selecting a lower limit and an upper limit, which define the boundaries of the specific range. A range defined in this manner may include an end value or may not include an end value, and may be any combination, that is, any lower limit may be combined with any upper limit to form a range. For example, if the ranges of 60-120 and 80-110 are listed for a specific parameter, it is understood that the ranges of 60-110 and 80-120 are also expected. In addition, if the minimum range values of 1 and 2 are listed, and if the maximum range values of 3, 4, and 5 are listed, the following ranges may all be expected: 1-3, 1-4, 1-5, 2-3, 2-4, and 2-5. In the present application, unless otherwise specified, a numerical range "a-b" represents an abbreviated representation for a combination of any real numbers between a and b, where both a and b are real numbers. For example, the numerical range of "0-5" represents that all real numbers between "0-5" have been listed herein, and "0-5" is only a shortened representation of these numerical combinations. In addition, a parameter expressed as an integer greater than or equal to 2 is equivalent to disclosing that the parameter is an integer such as 2, 3, 4, 5, 6, 7, 8, 9, 10, 11, or 12.

Unless otherwise specified, all embodiments and optional embodiments of the present application may be combined with each other to form new technical solutions.

Unless otherwise specified, all technical features and optional technical features of the present application may be combined with each other to form new technical solutions.

Unless otherwise specified, all steps of the present application may be performed sequentially or randomly, preferably sequentially. For example, the method includes steps (a) and (b), indicating that the method may include sequentially performed steps (a) and (b) or may include sequentially performed steps (b) and (a). For example, the mentioned method may further include step (c), which indicates that step (c) may be added to the method in any order, for example, the method may include steps (a), (b), and (c), may include steps (a), (c), and (b), may include steps (c), (a) and (b), or the like.

Unless otherwise specified, the "include" and "comprise" mentioned in the present application represent an open type, or may be a closed type. For example, the "include" and "comprise" may indicate that other components not listed may be further included or comprised, or only listed components may be included or comprised.

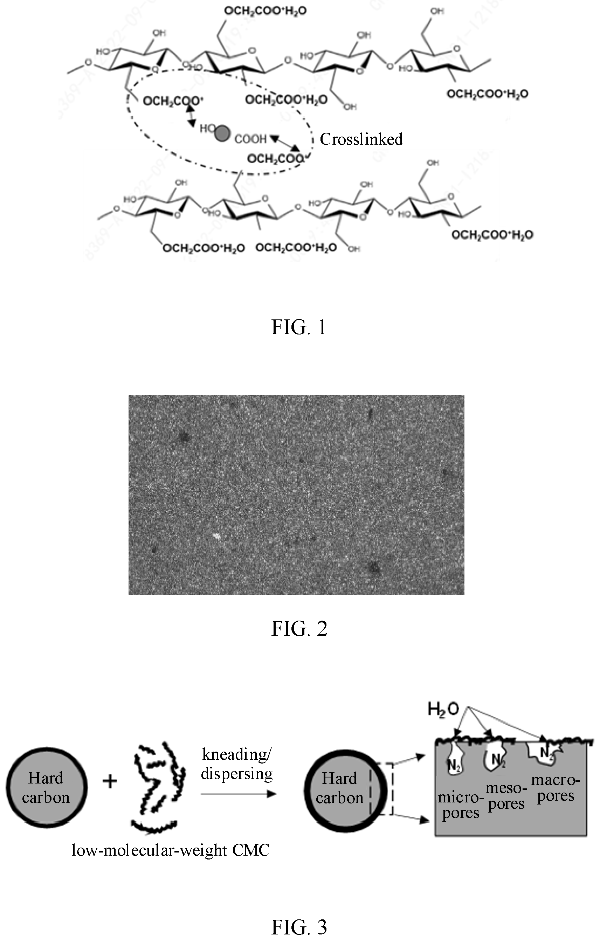

Unlike lithium secondary batteries, sodium secondary batteries commonly use hard carbon as their negative electrode active material. Due to the fact that hard carbon precursors are rich in heteroatoms such as hydrogen, oxygen, and nitrogen, the prepared hard carbon surface contains a large number of oxygen-containing functional groups (oxygen content >10%), and side chains of sodium carboxymethyl cellulose (with a weight average molecular weight greater than 300000), a commonly used dispersant in negative electrode slurries, tend to bond the oxygen-containing functional groups on the surface of hard carbon to form a crosslinked structure, inducing gelation of the negative electrode slurry (as shown in FIG. 1). Moreover, the hard carbon particles are small, irregular in surfaces, highly rough, and have a large specific surface area and high surface energy, which makes them prone to agglomeration, further exacerbating gelation of the negative electrode slurry. In addition, hard carbon particles have pores, and solvent water in the negative electrode slurry slowly enters the pores of hard carbon, expelling gases inside the hard carbon pores, causing foaming of the negative electrode slurry and further deteriorating gelation. The capacity contribution of hard carbon mainly includes two stages. The capacity within from 1.5 V to 0.1 V (vs Na/Na⁺) in the first stage is attributed to the adsorption process of Na⁺ at defect sites on the surface of hard carbon, while the capacity contribution below 0.1 V (vs Na/Na⁺) in the second stage is attributed to the filling of Na⁺ into micropores of hard carbon. To improve the negative electrode capacity, the porosity in hard carbon is often increased in the prior art. High porosity improves the capacity of hard carbon while also bringing more severe process issues, making negative electrode slurries containing hard carbon suffer from more serious foaming and gelation problems. Both gelation and foaming of the negative electrode slurry are unfavorable for subsequent coating of the negative electrode slurry, which has a significant impact on mass production and performance of sodium secondary batteries. Therefore, it is necessary to provide a negative electrode slurry with significantly suppressed gelation and foaming to meet market demands.

### [Negative electrode slurry]

In view of this, the present application provides a negative electrode slurry for a sodium secondary battery, where the negative electrode slurry includes a negative electrode active material and a modifying agent coated on a surface of the negative electrode active material, the negative electrode active material includes one or more of hard carbon and hard carbon-coated graphite, and the modifying agent includes a carboxymethyl cellulose salt having a weight average molecular weight of 20000 to 150000.

In some embodiments, the weight average molecular weight of the carboxymethyl cellulose salt may be 20000, 30000, 40000, 50000, 60000, 70000, 80000, 90000, 100000, 110000, 120000, 130000, 140000, 150000, or a value in a range defined by any two of the above values.

Generally, due to properties of hard carbon itself and reaction of hard carbon with conventional sodium carboxymethyl cellulose (with a weight average molecular weight greater than 300000), a negative electrode slurry using hard carbon as the negative electrode active material is prone to foaming and gelation. Foaming and gelation both affect subsequent coating. For example, issues such as missed coating of the negative electrode slurry (as shown in FIG. 2, black spots in the optical microscope image of the negative electrode sheet represent missed coating of the negative electrode slurry) and a high weight loss rate of the negative electrode sheet may occur. The missed coating of the negative electrode slurry and high weight loss rate of the negative electrode sheet both affect the distribution uniformity of the negative electrode active material, leading to fluctuations in the CB value of the negative electrode sheet and the risk of serious sodium plating. In addition, these issues also affect the cycling performance and storage performance of the sodium secondary battery.

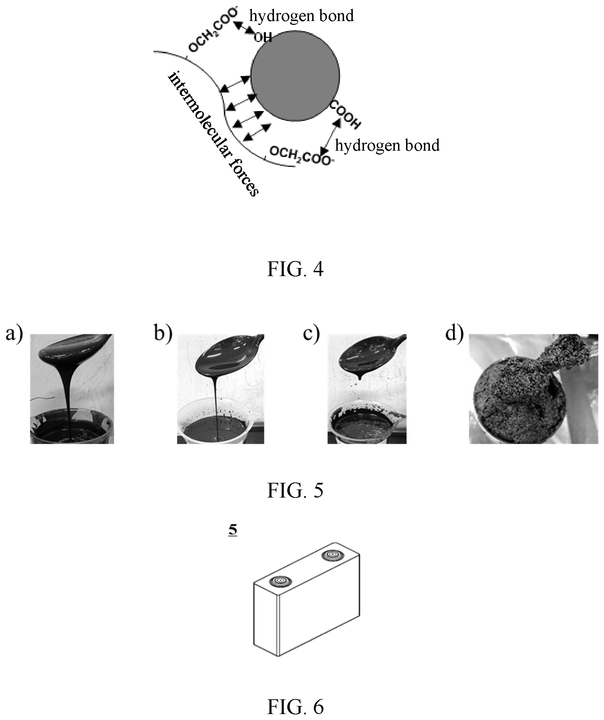

It can be understood that, compared with sodium carboxymethyl cellulose having a weight average molecular weight greater than 300000, the modifying agent containing a carboxymethyl cellulose salt having a weight average molecular weight of 20000 to 150000 has improved chain extensibility and lower steric hindrance in the negative electrode slurry due to its reduced weight average molecular weight, which is beneficial for coating between the modifying agent and hard carbon. As shown in FIG. 3 and FIG. 4 (the gas inside pores of hard carbon in FIG. 3 is nitrogen because hard carbon is prepared in a nitrogen atmosphere and nitrogen is generated during the preparation process, and the nitrogen is adsorbed inside the pores), the modifying agent containing a carboxymethyl cellulose salt having a weight average molecular weight of 20000 to 150000 may form strong intermolecular interactions with sp² hybridized C-C bonds on the surface of hard carbon through the main chain, so that the modifying agent is coated on the surface of hard carbon. The coating structure formed by the modifying agent and hard carbon facilitates regulation of the pore distribution of hard carbon, and reduces the probability of water molecules in the negative electrode slurry entering the pores of hard carbon, thereby reducing the degree of foaming of the negative electrode slurry. More importantly, side chains of the modifying agent containing the carboxymethyl cellulose salt having a weight average molecular weight of 20000 to 150000 may bind with oxygen-containing functional groups on the surface of hard carbon, thereby reducing the degree of gelation of the negative electrode slurry caused by a crosslinked structure formed by the binding of side chains of sodium carboxymethyl cellulose having a weight average molecular weight greater than 300000 with oxygen-containing functional groups on the surface of hard carbon. Moreover, side chains of carboxymethyl cellulose salt coated on the surface of hard carbon may also form a space charge layer, which is beneficial for increasing the repulsion between hard carbon particles, thereby reducing the degree of gelation of the negative electrode slurry caused by the aggregation of hard carbon particles, improving processability of the negative electrode slurry, increasing the yield, and facilitating the mass production of sodium secondary batteries. In addition, this is beneficial for improving storage performance and cycling performance of sodium secondary batteries.

As used herein, the "weight loss rate of the non-cold-pressed negative electrode sheet" may characterize the content of water entering pores of hard carbon. The mass lost by the non-cold-pressed negative electrode sheet when baked at 140°C is all the mass of water. A lower weight loss rate of the non-cold-pressed negative electrode sheet indicates that fewer water molecules enter the pores of hard carbon, which is more beneficial for mitigating foaming of the negative electrode slurry.

As used herein, "rheological property" may characterize whether the negative electrode slurry exhibits shear thickening or shear thinning under a shear force. Shear thinning is beneficial for coating of the negative electrode slurry, while shear thickening is not beneficial for coating of the negative electrode slurry.

In some embodiments, the modifying agent includes a carboxymethyl cellulose salt having a weight average molecular weight of 40000 to 100000.

Further controlling the weight average molecular weight of carboxymethyl cellulose salt in the modifying agent to be 40000 to 100000 is beneficial for further improving processability of the negative electrode slurry, as well as improving cycling performance and storage performance of the sodium secondary battery.

In some embodiments, the carboxymethyl cellulose salt includes one or more of lithium carboxymethyl cellulose, sodium carboxymethyl cellulose, potassium carboxymethyl cellulose, rubidium carboxymethyl cellulose, and cesium carboxymethyl cellulose.

In some embodiments, the carboxymethyl cellulose salt is sodium carboxymethyl cellulose.

In some embodiments, the carboxymethyl cellulose salt is lithium carboxymethyl cellulose.

In some embodiments, a mass ratio of the modifying agent to the negative electrode active material is 0.001 to 0.011. In some embodiments, the mass ratio of the modifying agent to the negative electrode active material is 0.002 to 0.0065.

In some embodiments, the mass ratio of the modifying agent to the negative electrode active material may be 0.001, 0.002, 0.003, 0.004, 0.005, 0.006, 0.0065, 0.007, 0.008, 0.009, 0.01, 0.011, or a value in a range defined by any two of the above values.

Controlling the mass ratio of the modifying agent and the negative electrode active material within an appropriate range is beneficial for providing sufficient modifying agent coated on the surface of hard carbon to form a coating structure, suppressing gelation and foaming of the negative electrode slurry, and also reducing the risk of exacerbating sodium deposition and the impact on battery performance caused by the coating layer on the surface of hard carbon being too thick due to the excessive proportion of the modifying agent.

In some embodiments, based on the total mass of solids in the negative electrode slurry, a mass content of the modifying agent is 0.1% to 1%. In some embodiments, the mass content of the modifying agent is 0.2% to 0.6%.

In some embodiments, based on the total mass of solids in the negative electrode slurry, the mass content of the modifying agent may be 0.1%, 0.2%, 0.3%, 0.4%, 0.5%, 0.6%, 0.7%, 0.8%, 0.9%, 1%, or a value in a range defined by any two of the above values.

Controlling the mass content of the modifying agent within an appropriate range may balance processability, storage performance, and cycling performance of the sodium secondary battery. When the content of the modifying agent is excessively low, a coating structure cannot be effectively formed between the modifying agent and hard carbon, failing to mitigate gelation and foaming of the negative electrode slurry. When the content of the modifying agent is excessively high, an excessively thick coating layer is likely to be formed on the surface of hard carbon, exacerbating the risk of sodium plating in the sodium secondary battery, and adversely affecting battery performance.

In some embodiments, based on the total mass of solids in the negative electrode slurry, the mass content of the negative electrode active material is 92% to 97%. In some embodiments, the mass content of the negative electrode active material is 92% to 95%.

In some embodiments, based on the total mass of solids in the negative electrode slurry, the mass content of the negative electrode active material is 92%, 92.5%, 93%, 93.5%, 94%, 94.5%, 95%, 95.5%, 96%, 96.5%, 97%, or a value in a range defined by any two of the above values.

Controlling the mass content of the negative electrode active material within an appropriate range provides sufficient sodium insertion sites so that the sodium secondary battery has high capacity.

In some embodiments, the solid content of the negative electrode slurry is 45% to 55%. In some embodiments, the solid content of the negative electrode slurry is 48% to 53%.

In some embodiments, the solid content of the negative electrode slurry may be 45%, 46%, 47%, 48%, 49%, 50%, 51%, 52%, 53%, 54%, 55%, or a value in a range defined by any two of the above values.

Controlling the negative electrode slurry within an appropriate range enables the negative electrode slurry to have a certain fluidity for subsequent processing.

In some embodiments, the negative electrode slurry further includes at least one of a conductive agent, a dispersant, a binder, and a plasticizer.

In some embodiments, the conductive agent includes one or more of Super P, Ketjenblack, acetylene black, carbon nanotubes, and graphene. In some embodiments, the conductive agent includes Super P.

In some embodiments, the dispersant includes sodium carboxymethyl cellulose having a weight average molecular weight of 400000 to 1000000.

In some embodiments, the binder includes one or more of styrene-butadiene rubber, polyacrylic acid, polyacrylate, polyamide, poly(acrylonitrile-acrylate), and poly(styrene-acrylate). In some embodiments, the binder includes styrene-butadiene rubber.

In some embodiments, the plasticizer includes 1,3-butanediol.

Sodium carboxymethyl cellulose having a weight average molecular weight of 400000 to 1000000 as a dispersant is beneficial for improving the dispersion uniformity of the negative electrode slurry and improving processability of the negative electrode slurry. The above conductive agent and binder may make the negative electrode sheet prepared using the negative electrode slurry have excellent conductivity and adhesion. The above plasticizer may make the negative electrode sheet prepared using the negative electrode slurry have excellent toughness and reduce cracking of the negative electrode sheet.

In some embodiments, a bubble volume per unit mass of hard carbon in the negative electrode slurry is not more than 2.5 ml/g.

As used herein, the bubble volume per unit mass of hard carbon in the negative electrode slurry may be measured by any known method. In an example, the negative electrode slurry (the mass of hard carbon in the negative electrode slurry is m, in units of g) is sealed in a sealed bag, and gas variation is measured by a drainage method. An initial volume is denoted as V0, in units of ml, and a measured volume after 48 h is denoted as V1, in units of ml. Then, the bubble volume per unit mass of hard carbon in the negative electrode slurry is given by (V1 - V0)/m, in units of ml/g.

In some embodiments, the bubble volume per unit mass of hard carbon in the negative electrode slurry is 0 ml/g, 0.2 ml/g, 0.5 ml/g, 0.8 ml/g, 1 ml/g, 1.2 ml/g, 1.5 ml/g, 1.8 ml/g, 2 ml/g, 2.2 ml/g, 2.5 ml/g, or a value in a range defined by any two of the above values.

The negative electrode slurry with a low degree of foaming can improve processability of the negative electrode sheet and is beneficial for improving storage performance and cycling performance of the sodium secondary battery.

In some embodiments, a viscosity change of the negative electrode slurry after being placed at 25°C for 48 hours is 3000 mPa·s to 12000 mPa·s.

As used herein, the viscosity change of the negative electrode slurry after being placed at 25°C for 48 hours can be tested by any known method. In an example, rotational viscometer measurement is used: first, an initial viscosity of the negative electrode slurry is measured using a rotational viscometer, an appropriate rotor is selected and fixed, and the negative electrode slurry was placed below the viscometer rotor such that the negative electrode slurry just reaches the scale line of the rotor. The instrument model is Shanghai Fangrui NDJ-5S, the rotor is No. 63 (2000-10000 mPa·s) or No. 64 (10000-50000 mPa·s), the rotation speed is 12 rpm, the test temperature is 25°C, and the test time is 5 minutes. Data are read after the reading becomes stabile. After standing at 25°C for 48 hours, the viscosity is measured again using the same method. The viscosity change of the negative electrode slurry after being placed at 25°C for 48 hours is a difference between the viscosity of the negative electrode slurry after standing for 48 hours and the initial viscosity of the negative electrode slurry.

In some embodiments, the viscosity change of the negative electrode slurry after being placed at 25°C for 48 hours is 3000 mPa·s, 4000 mPa·s, 5000 mPa·s, 6000 mPa·s, 7000 mPa·s, 8000 mPa·s, 9000 mPa·s, 10000 mPa·s, 11000 mPa·s, 12000 mPa·s, or a value in a range defined by any two of the above values.

The viscosity change of the negative electrode slurry after being placed at 25°C for 48 hours is 3000 mPa·s to 12000 mPa·s, and its gelation is significantly suppressed, which is beneficial for subsequent processing of the negative electrode slurry, as well as improving storage performance and cycling performance of the sodium secondary battery.

According to a second aspect of the present application, a preparation method of a negative electrode slurry is provided, including: coating a modifying agent on a surface of a negative electrode active material to obtain an adhesive mixture; and dispersing the adhesive mixture in a solvent to prepare the negative electrode slurry; where the negative electrode active material includes hard carbon and/or hard carbon-coated graphite, the modifying agent includes a carboxymethyl cellulose salt having a weight average molecular weight of 20000 to 150000, and the carboxymethyl cellulose salt includes one or more of lithium carboxymethyl cellulose, sodium carboxymethyl cellulose, potassium carboxymethyl cellulose, rubidium carboxymethyl cellulose, and cesium carboxymethyl cellulose.

As used herein, the "adhesive mixture" refers to a dough-like mixture.

Coating the modifying agent on the surface of the negative electrode active material can effectively reduce the degree of gelation of the negative electrode slurry. Specifically, the modifying agent containing a carboxymethyl cellulose salt having a weight average molecular weight of 20000 to 150000 has higher chain extensibility in the negative electrode slurry, which is beneficial for the coating between the modifying agent and hard carbon. Accordingly, the coating structure formed by the modifying agent and hard carbon facilitates regulation of the pore distribution of hard carbon, and reduces the probability of water molecules in the negative electrode slurry entering the pores of hard carbon, thereby mitigating the degree of foaming of the negative electrode slurry. Furthermore, side chains of the modifying agent containing a carboxymethyl cellulose salt having a weight average molecular weight of 20000 to 150000 may bind with oxygen-containing functional groups on the surface of hard carbon, thereby reducing the degree of gelation of the negative electrode slurry caused by a crosslinked structure formed by the binding of side chains of the dispersant with oxygen-containing functional groups on the surface of hard carbon. Moreover, side chains of carboxymethyl cellulose salt coated on the surface of hard carbon may also form a space charge layer, which is beneficial for increasing the repulsion between hard carbon particles, thereby reducing the degree of gelation of the negative electrode slurry caused by the aggregation of hard carbon particles, improving processability of the negative electrode slurry, increasing yield, and facilitating mass production of sodium secondary batteries. In addition, this is beneficial for improving storage performance and cycling performance of sodium secondary batteries.

In some embodiments, coating the modifying agent on the surface of the negative electrode active material specifically includes: kneading a raw material containing the negative electrode active material with the modifying agent in a solvent to obtain the adhesive mixture.

As used herein, "kneading" refers to an operation in which a small amount of liquid (or binder) is added to solid powder, so that the liquid uniformly wets the interior and surface of powder particles, thereby forming a homogeneous plastic material.

By kneading the negative electrode active material with the modifying agent in the solvent in advance, the modifying agent can be effectively coated on the surface of the negative electrode active material, thereby increasing the coating coverage.

In some embodiments, the kneading time is 30 min to 120 min. In some embodiments, the kneading time is 40 min to 80 min.

In some embodiments, the kneading time may be 30 min, 40 min, 50 min, 60 min, 70 min, 80 min, 90 min, 100 min, 110 min, 120 min, or a value in a range defined by any two of the above values.

Controlling the kneading time within an appropriate range is beneficial for forming a coating structure between the modifying agent and hard carbon, suppressing foaming and gelation of the negative electrode slurry, enhancing processability of the negative electrode slurry, and improving storage performance and cycling performance of the sodium secondary battery.

In some embodiments, the solid content of the adhesive mixture is 60% to 68%. In some embodiments, the solid content of the adhesive mixture is 60% to 65%.

In some embodiments, the solid content of the adhesive mixture may be 60%, 61%, 62%, 63%, 64%, 65%, 66%, 67%, 68%, or a value in a range defined by any two of the above values.

In some embodiments, the preparation method specifically includes: stirring and mixing a conductive agent, a negative electrode active material, and a modifying agent at a stirring speed of 300 rpm to 800 rpm for a stirring time of 10 min to 60 min to obtain a dry mixture; kneading the dry mixture in a solvent to obtain an adhesive mixture; stirring and mixing the adhesive mixture, a dispersant, and a solvent at a stirring speed of 1200 rpm to 1800 rpm for a stirring time of 30 min to 60 min to obtain a first adhesive solution; and stirring and mixing the first adhesive solution with a plasticizer, then adding a binder and continuing to stir to uniformity at a stirring speed of 500 rpm to 800 rpm for a stirring time of 10 min to 30 min to obtain a negative electrode slurry.

The above preparation method may significantly suppress foaming and gelation of the negative electrode slurry, enhance processability of the negative electrode slurry, and improve storage performance and cycling performance of the sodium secondary battery.

### [Negative electrode sheet]

The negative electrode sheet includes a negative electrode current collector and a negative electrode film layer located on at least one side of the negative electrode current collector.

In an example, the negative electrode current collector has two opposite surfaces in its own thickness direction, and the negative electrode film layer is provided on any one or both of the two opposite surfaces of the negative electrode current collector.

In some embodiments, the negative electrode current collector may be a metal foil or a composite current collector. For example, a copper foil may be used as the metal foil. The composite current collector may include a polymer material base layer and a metal layer formed on at least one surface of the polymer material substrate. The composite current collector may be formed by forming a metal material (copper, copper alloy, nickel, nickel alloy, titanium, titanium alloy, silver, silver alloy, or the like) on a polymer material substrate (such as a substrate of polypropylene (PP), polyethylene terephthalate (PET), polybutylene terephthalate (PBT), polystyrene (PS), or polyethylene (PE)).

In some embodiments, the negative electrode film layer is prepared using the negative electrode slurry in some embodiments or the negative electrode slurry prepared by the preparation method in some embodiments.

The negative electrode sheet may be prepared in the following manner: the above negative electrode slurry is extrusion-coated or transfer-coated onto a negative electrode current collector at a coating speed of 25 m/min, and the coated negative electrode current collector is then placed in an oven with a temperature set at 110°C to 130°C, followed by cold pressing and slitting to obtain a negative electrode sheet.

In some embodiments, the negative electrode film layer includes a negative electrode active material and a modifying agent coated on a surface of the negative electrode active material. The negative electrode active material includes hard carbon and/or hard carbon-coated graphite, the modifying agent includes a carboxymethyl cellulose salt having a weight average molecular weight of 20000 to 150000, and the carboxymethyl cellulose salt includes one or more of lithium carboxymethyl cellulose, sodium carboxymethyl cellulose, potassium carboxymethyl cellulose, rubidium carboxymethyl cellulose, and cesium carboxymethyl cellulose.

### [Positive electrode sheet]

The positive electrode sheet includes a positive electrode current collector and a positive electrode material layer located on at least one side of the positive electrode current collector.

In an example, the positive electrode current collector has two opposite surfaces in its own thickness direction, and the positive electrode material layer is provided on any one or both of the two opposite surfaces of the positive electrode current collector.

In some embodiments, the positive electrode current collector may be a metal foil or a composite current collector. For example, an aluminum foil may be used as the metal foil. The composite current collector may include a polymer material base layer and a metal layer formed on at least one surface of the polymer material base layer. The composite current collector may be formed by forming a metal material (aluminum, aluminum alloy, nickel, nickel alloy, titanium, titanium alloy, silver, silver alloy, or the like) on a polymer material substrate (such as a substrate of polypropylene (PP), polyethylene terephthalate (PET), polybutylene terephthalate (PBT), polystyrene (PS), or polyethylene (PE)).

In some embodiments, the positive electrode material layer includes a positive electrode active material, and the positive electrode active material may be a well-known positive electrode active material used for batteries in the art. In an example, the positive electrode active material may include at least one of the following materials: layered transition metal oxides, polyanionic compounds, or Prussian blue compounds. However, the present application is not limited to these materials, and may alternatively use other conventional materials that can be used as positive electrode active materials for batteries. One of these positive electrode active materials may be used alone, or two or more of them may be used in combination.Among them, the Prussian blue compound includes NaₓP[R(CN)₆]_{δ}·zH₂O, where the P and the R are each independently selected from at least one of transition metal elements, 0 < x ≤ 2, 0 < δ ≤ 1, and 0 ≤ z ≤ 10; the polyanionic compound includes Na_{b}Me_{c}(PO₄)_{d}O₂X, where A includes one or more of H, Li, Na, K, and NH₄, Me includes one or more of Ti, Cr, Mn, Fe, Co, Ni, V, Cu, and Zn, X includes one or more of F, Cl, and Br, 0 < b ≤ 4, 0 < c ≤ 2, and 1 ≤ d ≤ 3; and the layered transition metal oxide includes NaₐM_{b}Fe_{c}O₂, where M includes transition metal ions, 0.67 < a < 1.1, 0.5 < b < 1, and 0 < c < 0.5.

In some embodiments, the positive electrode material layer may further optionally include a binder. In an example, the binder may include at least one of polyvinylidene fluoride (PVDF), polytetrafluoroethylene (PTFE), vinylidene fluoride-hexafluoroethylene-propylene terpolymer, vinylidene fluoride-hexafluoropropylene-tetrafluoroethylene terpolymer, tetrafluoroethylene-hexafluoropropylene copolymer, and fluorinated acrylate resin.

In some embodiments, the positive electrode material layer may further optionally include a conductive agent. In an example, the conductive agent may include at least one of superconducting carbon, acetylene black, carbon black, Ketjenblack, carbon dots, carbon nanotubes, graphene, and carbon nanofibers.

In some embodiments, the positive electrode sheet may be prepared in the following manner: the components for preparing the positive electrode sheet, such as the positive electrode active material, conductive agent, binder, and any other components, are dispersed in a solvent (such as N-methylpyrrolidone) to form a positive electrode slurry; the above positive electrode slurry is extrusion-coated or transfer-coated on a positive electrode current collector aluminum foil having a thickness of 13 µm at a coating speed of 30 m/min; the coated positive electrode current collector aluminum foil is then placed in an oven with a temperature set at 110°C to 130°C, followed by cold pressing and slitting to obtain a positive electrode sheet.

### [Electrolyte]

An electrolyte conducts ions between a positive electrode sheet and a negative electrode sheet. The electrolyte is not limited to any specific type in the present application, and may be selected based on needs. For example, the electrolyte may be in a liquid state, a gel state, or an all-solid state.

In some embodiments, the electrolyte is an electrolyte solution. The electrolyte solution includes an electrolyte salt and a solvent.

In some embodiments, the electrolyte solution includes an electrolyte salt selected from at least one of NaPF₆, NaBF₄, NaN(SO₂F)₂ (NaFSI), NaClO₄, NaAsF₆, NaB(C₂O₄)₂ (NaBOB), NaBF₂(C₂O₄) (NaDFOB), NaN(SO₂RF)₂, or NaN(SO₂F)(SO₂RF), where RF is represented as C_{b}F_{2b+1}, b is an integer within 1 to 10, optionally an integer within 1 to 3.

In some embodiments, the electrolyte salt is selected from one or more of NaPF₆, NaN(SO₂F)₂, NaN(CF₃SO₂)₂, NaB(C₂O₄)₂, or NaBF₂(C₂O₄). In some embodiments, the electrolyte salt is selected from one or more of NaPF₆, NaN(SO₂RF)₂, or NaBF₂(C₂O₄). In some embodiments, RF is -CF₃, -C₂F₅, or -CF₂CF₂CF₃.

In some embodiments, the electrolyte solution includes a solvent, and the solvent includes at least one of a linear carbonate, a linear carboxylate ester, a cyclic carbonate, an ether solvent, a sulfone solvent, and a nitrile solvent. In some embodiments, the linear carbonate includes at least one of dimethyl carbonate (DMC), diethyl carbonate (DEC), ethyl methyl carbonate (EMC), methyl propyl carbonate (MPC), methyl isopropyl carbonate (MIPC), methyl butyl carbonate, ethyl propyl carbonate, dipropyl carbonate, and dibutyl carbonate. In some embodiments, the linear carbonate includes at least one of dimethyl carbonate (DMC), diethyl carbonate (DEC), ethyl methyl carbonate (EMC), and methyl propyl carbonate (MPC). In some embodiments, the linear carboxylate ester includes at least one of methyl formate (MF), ethyl formate (EF), methyl propionate (MP), ethyl propionate (EP), propyl propionate (PP), ethyl butyrate (EB), methyl acetate (MA), ethyl acetate (EA), and propyl acetate (PA). In some embodiments, the linear carboxylate ester includes at least one of methyl propionate (MP), ethyl propionate (EP), propyl propionate (PP), methyl acetate (MA), ethyl acetate (EA), and propyl acetate (PA). In some embodiments, the ether solvent includes at least one of 1,3-dioxolane (DOL), tetrahydrofuran (THF), 2-methyltetrahydrofuran (2Me-THF), tetrahydropyran (THP), 1,2-dimethoxyethane (DME), diethylene glycol dimethyl ether (DG), 1,2-diethoxyethane, and 1,2-dibutoxyethane.

In some embodiments, the electrolyte solution may further optionally include an additive. For example, the additive may include a negative electrode film-forming additive, a positive electrode film-forming additive, and may also include an additive that can improve certain performances of the battery, such as an additive for improving overcharge performance of the battery and an additive for improving high-temperature or low-temperature performance of the battery.

### [Separator]

In some embodiments, the sodium secondary battery further includes a separator. Any well-known porous structure separator having good chemical stability and mechanical stability may be selected.

In some embodiments, the material of the separator may be selected from at least one of glass fiber, non-woven fabric, polyethylene, polypropylene, and polyvinylidene fluoride. The separator may be a single-layer film or a multi-layer composite film. When the separator is a multi-layer composite film, the materials of each layer may be the same or different.

### [Sodium secondary battery]

In some embodiments, the positive electrode sheet, negative electrode sheet, and separator may be made into an electrode assembly through a winding process or a stacking process.

In some embodiments, the sodium secondary battery may include an outer package. The outer package may be used for packaging the electrode assembly and electrolyte solution.

In some embodiments, the outer package of the sodium secondary battery may be a hard shell, such as a hard plastic shell, an aluminum shell, or a steel shell. The outer package of the sodium secondary battery may also be a soft package, such as a pouch-type soft package. The material of the soft package may be plastic, and examples of the plastic include polypropylene, polybutylene terephthalate, and polybutylene succinate.

The sodium secondary battery of the present application may have a cylindrical shape, a prismatic shape, or any other shape. For example, FIG. 6 shows a sodium secondary battery 5 having a prismatic structure as an example.

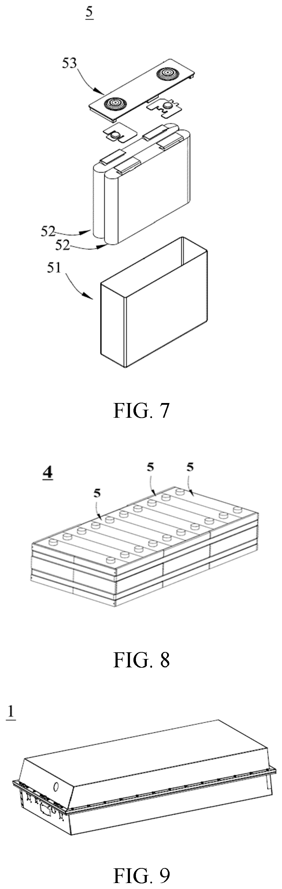

In some embodiments, referring to FIG. 7, the outer package may include a housing 51 and a cover plate 53. The housing 51 may include a bottom plate and side plates connected to the bottom plate, and the bottom plate and the side plates enclose an accommodating cavity. The housing 51 has an opening communicated with the accommodating cavity, and the cover plate 53 can cover the opening to close the accommodating cavity. The positive electrode sheet, negative electrode sheet, and separator may form an electrode assembly 52 through a winding process or a stacking process. The electrode assembly 52 is packaged in the accommodating cavity. The electrolyte solution infiltrates the electrode assembly 52. The sodium secondary battery 5 may include one or more electrode assemblies 52, and persons skilled in the art may make choices according to actual requirements.

In some embodiments, the sodium secondary battery may be assembled into a battery module, and the battery module may include one or more sodium secondary batteries. The specific quantity may be chosen by those skilled in the art according to use and capacity of the battery module.

FIG. 8 shows a battery module 4 as an example. Referring to FIG. 8, in the battery module 4, a plurality of sodium secondary batteries 5 may be arranged in sequence along a length direction of the battery module 4. However, the secondary batteries may alternatively be arranged in any other manner. Further, the plurality of sodium secondary batteries 5 may be fixed by fasteners.

Optionally, the battery module 4 may further include an outer shell having an accommodating space, and the plurality of sodium secondary batteries 5 are accommodated in the accommodating space.

In some embodiments, the battery module may alternatively be assembled into a battery pack, and the number of battery modules contained in the battery pack can be one or more. The specific quantity may be chosen by those skilled in the art according to use and capacity of the battery pack.

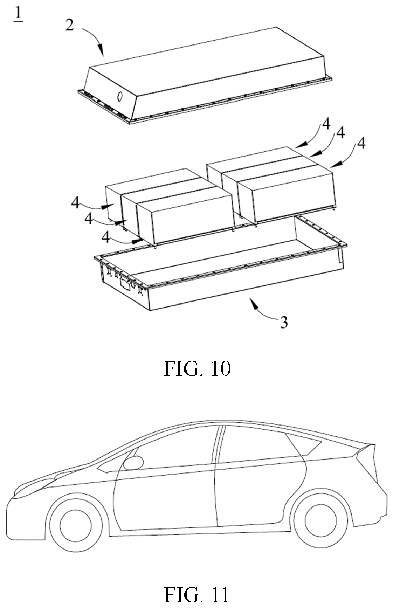

FIG. 9 and FIG. 10 show a battery pack 1 as an example. Referring to FIG. 9 and FIG. 10, the battery pack 1 may include a battery enclosure and a plurality of battery modules 4 disposed in the battery enclosure. The battery enclosure includes an upper enclosure 2 and a lower enclosure 3, the upper enclosure 2 can cover the lower enclosure 3 and form a closed space for accommodating the battery modules 4. The plurality of battery modules 4 can be arranged in the battery enclosure in any manner.

In addition, the present application further provides an electric device, where the electric device includes at least one of the sodium secondary battery, battery module, or battery pack provided in the present application. The sodium secondary battery, battery module, or battery pack may be used as a power source of the electric device or as an energy storage unit of the electric device. The electric device may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, and the like, but is not limited thereto.

As the electric device, the sodium secondary battery, the battery module, or the battery pack may be selected based on requirements for using the electric device.

FIG. 11 shows an electric device as an example. The electric device is a battery electric vehicle, a hybrid electric vehicle, or a plug-in hybrid electric vehicle, or the like. To satisfy a requirement of the electric device for high power and high energy density of the sodium secondary battery, a battery pack or a battery module may be used.

In another example, the device may be a mobile phone, a tablet computer, a notebook computer, or the like. Such a device is generally required to be light and thin and may use a sodium secondary battery as its power source.

### Examples

The following describes examples of the present application. The examples described below are illustrative and only used to explain the present application, and cannot be construed as limitations on the present application. Examples whose technical solutions or conditions are not specified are carried out in accordance with technical solutions or conditions described in literature in the field or made in accordance with product instructions. Reagents or instruments used are all conventional products that are commercially available if no manufacturer is indicated.

### I. Preparation methods

### Example 1

### (1) Negative electrode slurry

In the preparation process, the mass ratio of the negative electrode active material hard carbon, conductive agent Super P, sodium carboxymethyl cellulose having a weight average molecular weight of 80000 (Chongqing Lihong), sodium carboxymethyl cellulose having a weight average molecular weight of 400000 (Nippon Paper), plasticizer 1,3-butanediol, and binder styrene-butadiene rubber (SBR) was 95:0.5:0.4:1.0:0.1:3;
the negative electrode active material hard carbon, conductive agent Super P, and sodium carboxymethyl cellulose having a weight average molecular weight of 80000 were mixed and stirred, with a stirring speed of 600 rpm and a stirring time of 40 min, to obtain a dry mixture;
the dry mixture was mixed with solvent water and kneaded, with a kneading time of 60 min, to obtain an adhesive mixture having a solid content of 65%.
the adhesive mixture and sodium carboxymethyl cellulose having a weight average molecular weight of 400000 were mixed, added with solvent water, and stirred to uniformity, with a stirring speed of 1600 rpm and a stirring time of 45 min, to obtain a first adhesive solution; and
the first adhesive solution was mixed with plasticizer 1,3-butanediol and stirred to uniformity, then binder styrene-butadiene rubber (SBR) was added and stirring was continued, with a stirring speed of 700 rpm and a stirring time of 25 min, to obtain a negative electrode slurry having a solid content of 50%, where
the temperature of the above preparation process was controlled at 25±3°C.

A bubble volume per unit mass of hard carbon in the negative electrode slurry was 0 ml/g, and a viscosity change of the negative electrode slurry after being placed at 25°C for 48 hours was 3240 mPa·s.

### (2) Negative electrode sheet

The above negative electrode slurry was extrusion-coated on a negative electrode current collector copper foil having a thickness of 8 µm at a coating speed of 25 m/min, and the coated negative electrode current collector was then placed in an oven with a temperature set at 120°C, followed by cold pressing and slitting to obtain a negative electrode sheet.

### (3) Positive electrode sheet

The above positive electrode active material Na_{7/9}Cu_{2/9}Fe_{1/9}Mn_{2/3}O₂, conductive agent acetylene black, and binder polyvinylidene fluoride (PVDF) at a weight ratio of 90:5:5 were fully stirred and mixed to uniformity in an N-methylpyrrolidone solvent system to obtain a positive electrode slurry; the above positive electrode slurry was extrusion-coated on a positive electrode current collector aluminum foil having a thickness of 13 µm at a coating speed of 30 m/min; and the coated positive electrode current collector aluminum foil was then placed in an oven with a temperature set at 120°C, followed by cold pressing and slitting to obtain a positive electrode sheet.

### (4) Electrolyte solution

In an argon atmosphere glove box (H₂O content < 10 ppm, O₂ content < 1 ppm), propylene carbonate (PC) and ethyl methyl carbonate (EMC) were mixed at a mass ratio of 30/70, and 1 M NaPF₆ sodium salt was dissolved therein, followed by stirring to uniformity to prepare an electrolyte solution.

### (5) Separator

A 12 µm polyethylene (PE) porous polymer film was used as the separator.

### (6) Preparation of battery

The positive electrode sheet, separator, and negative electrode sheet were stacked in sequence, with the separator located between the positive and negative electrode sheets for separation. The resulting stack was wound to obtain a bare cell. After tabs were welded, the bare cell was placed in an outer package, the above prepared electrolyte solution was injected into the cell that was dried, followed by processes such as packaging, standing, formation, shaping, and capacity testing to obtain the sodium secondary battery product in Example 1.

Sodium secondary batteries in Examples 2 to 17 were prepared using a method similar to that of the sodium secondary battery in Example 1, except that preparation parameters in the preparation method of the negative electrode slurry were adjusted, with details about these different preparation parameters shown in Table 1.

The sodium secondary battery in Example 18 was prepared using a method similar to that of the sodium secondary battery in Example 1, except that the preparation parameters in the preparation method of the negative electrode slurry were adjusted as follows:
in the preparation process, the mass ratio of the negative electrode active material hard carbon, conductive agent Super P, sodium carboxymethyl cellulose having a weight average molecular weight of 80000 (Chongqing Lihong), sodium carboxymethyl cellulose having a weight average molecular weight of 400000 (Nippon Paper), plasticizer 1,3-butanediol, and binder styrene-butadiene rubber (SBR) was 95:0.5:0.4:1.0:0.1:3;
the negative electrode active material hard carbon, conductive agent Super P, and sodium carboxymethyl cellulose having a weight average molecular weight of 80000 were mixed and stirred, and solvent water was added and kneaded, with a kneading time of 60 min, to obtain an adhesive mixture having a solid content of 65%;
the adhesive mixture, sodium carboxymethyl cellulose having a weight average molecular weight of 400000, plasticizer 1,3-butanediol, and binder styrene-butadiene rubber (SBR) were mixed, added with solvent water, and stirred to uniformity, with a stirring speed of 1700 rpm and a stirring time of 50 min, to obtain a negative electrode slurry having a solid content of 50%; where
the temperature of the above preparation process was controlled at 25±3°C.

The bubble volume per unit mass of hard carbon in the negative electrode slurry was 0.7 ml/g, and the viscosity change of the negative electrode slurry after being placed at 25°C for 48 hours was 9030 mPa·s.

The sodium secondary battery in Example 19 was prepared using a method similar to that of the sodium secondary battery in Example 1, except that the preparation parameters in the preparation method of the negative electrode slurry were adjusted to adopt a one-step preparation method, with details as follows:
in the preparation process, the mass ratio of the negative electrode active material hard carbon: conductive agent Super P, sodium carboxymethyl cellulose having a weight average molecular weight of 80000 (Chongqing Lihong), sodium carboxymethyl cellulose having a weight average molecular weight of 400000 (Nippon Paper), plasticizer 1,3-butanediol, and binder styrene-butadiene rubber (SBR) was 95:0.5:0.4:1.0:0.1:3; and
the negative electrode active material hard carbon, conductive agent Super P, sodium carboxymethyl cellulose having a weight average molecular weight of 80000, sodium carboxymethyl cellulose having a weight average molecular weight of 400000, binder styrene-butadiene rubber (SBR), plasticizer 1,3-butanediol, and solvent water were mixed and stirred, with a stirring speed of 1200 rpm and a stirring time of 2 h, to obtain a negative electrode slurry having a solid content of 50%; where
the temperature of the above preparation process was controlled at 25±3°C.

The bubble volume per unit mass of hard carbon in the negative electrode slurry was 2.2 ml/g, and the viscosity change of the negative electrode slurry after being placed at 25°C for 48 hours was 12000 mPa·s.

The sodium secondary batteries in Comparative Examples 1 to 3 were prepared using a method similar to that of the sodium secondary battery in Example 1, except that the weight average molecular weight of the modifying agent was adjusted, with details shown in Table 1.

### II. Performance tests

### 1. Negative electrode slurry

### (1) Gelation state test of negative electrode slurry after standing for 48 hours

After the negative electrode slurry was allowed to stand at 25°C for 48 hours, the negative electrode slurry in a beaker was lifted using a steel ruler, and the gelation state of the negative electrode slurry was determined according to the flow state of the negative electrode slurry.

A non-gel state was characterized in that the negative electrode slurry flowed naturally without interruption and that the negative electrode slurry spread flatly on the surface of the steel ruler, without agglomeration, as shown in FIG. 5a).

A slight gelation state was characterized in that the negative electrode slurry flowed naturally without interruption, but the fluid was thinner, and that the negative electrode slurry was basically spread on the surface of the steel ruler, with slight small lumps, as shown in FIG. 5b).

A moderate gelation state was characterized in that the negative electrode slurry dripped naturally and intermittently, failing to form a continuous flow, and that the negative electrode slurry could not be spread on the surface of the steel ruler, with obvious lumpy agglomeration, as shown in FIG. 5c).

A severe gelation state was characterized in that the negative electrode slurry could not flow down continuously but fell in lumps or remained directly on the steel ruler without flowing down, as shown in FIG. 5d).

### (2) Filtration performance test

A 500 ml beaker was placed below a 200-mesh filter screen support, and 500 ml of the negative electrode slurry was taken and placed in the filter screen for filtration. The time required for the volume of the negative electrode slurry collected in the beaker to reach 300 ml was recorded.

### (3) Test of bubble volume per unit mass of hard carbon in negative electrode slurry

The negative electrode slurry (where the mass of hard carbon in the negative electrode slurry was m, in units of g) was sealed in a sealed bag; and gas variation was measured using a drainage method. An initial volume was denoted as V0, in units of ml, and a measured volume after 48 h was denoted a V1, in units of ml. Then, the bubble volume per unit mass of hard carbon in the negative electrode slurry was given by (V1 - V0)/m, in units of ml/g.

### (4) Rheological test

The test instrument was an Anton Paar rheometer. During testing, the negative electrode slurry was placed between upper and lower plates, and the temperature of the negative electrode slurry was controlled by a heating device. A motor was controlled to rotate at a certain speed (that is, shear rate), and the torque required to maintain this rotation speed (that is, the resistance of the negative electrode slurry, which could be converted to shear stress) was measured. Then, the viscosity of the sample could be obtained through calculation. The instrument may be controlled to perform testing at continuously varying rotational speeds, so that viscosities of the negative electrode slurry at different shear rates may be obtained. When the viscosity of the negative electrode slurry decreased as the shear rate increased, the rheological property was determined to be shear thinning, that is, no shear thickening phenomenon existed, and the rheological property was rated as "none". When the viscosity of the negative electrode slurry increased as the shear rate increased, a shear thickening phenomenon existed, and the rheological property was rated as "Yes".

### 2. Negative electrode sheet

### (1) Weight loss rate test of non-cold-pressed negative electrode sheet

The coated and non-cold-pressed negative electrode sheet was punched into small discs of a fixed size, and its weight was recorded as m1. The disc was baked at 140°C for 6 min, and then its weight was recorded as m2. The weight loss rate of the non-cold-pressed negative electrode sheet is given by (m1 - m2)/m1.

### 3. Battery

### (1) Cycling performance

At 25°C, the prepared battery was charged at a constant current of 1C to 3.95 V, then charged at a constant voltage of 3.95 V until the current dropped to 0.05C. After standing for 10 min, the battery was discharged at a constant current of 1C to 1.5 V. This constituted one charge/discharge cycle of the battery. The capacity of the first discharge was taken as 100%. Charge/discharge cycling was repeatedly performed, and when the discharge capacity decayed to 80%, the test was terminated. The number of cycles was recorded, and the number of cycles corresponding to a capacity retention rate of 80% was used as an indicator for evaluating cycling performance of the battery.

### (2) Storage performance

At 25°C, the prepared battery was charged at a constant current of 1C to 3.95 V, then charged at a constant voltage of 3.95 V until the current dropped to 0.05C. After standing for 10 min, the battery was discharged at a constant current of 1C to 1.5 V. This constituted one charge/discharge cycle of the battery, and the capacity of the first discharge was taken as 100%. Then, the battery was placed in a 60°C oven and stored for a period of time. Thereafter, the battery was taken out, and the above charging steps were repeated, and the discharge capacity was recorded. When the discharge capacity decayed to 80%, the test was terminated, and the number of storage days was recorded. The number of storage days corresponding to a capacity retention rate of 80% was used as an indicator for evaluating storage performance of the battery.

### III. Analysis of test results of examples and comparative examples

Batteries in the examples and comparative examples were respectively prepared according to the above methods, and various performance parameters were measured, with the results shown in Table 1 and Table 2 below.

**Table 1**

| No. | Negative electrode sheet | | | | | | Negative electrode slurry | |
|---|---|---|---|---|---|---|---|---|
| | Negative electrode active material | | Modifying agent | | | Mass ratio of modifying agent to negative electrode active material | Adhesive mixture | |
| | Material | Mass content (%) | Material | Weight average molecular weight (10⁴) | Mass content (%) | | Kneading time (min) | Solid content (%) |
| Example 1 | Hard carbon | 95 | Sodium carboxymethyl cellulose | 8 | 0.4 | 0.0042 | 60 | 65 |
| Example 2 | Hard carbon | 92 | Sodium carboxymethyl cellulose | 8 | 0.4 | 0.0043 | 60 | 65 |
| Example 3 | Hard carbon | 97 | Sodium carboxymethyl cellulose | 8 | 0.4 | 0.0041 | 60 | 65 |
| Example 4 | Hard carbon | 95 | Sodium carboxymethyl cellulose | 2 | 0.4 | 0.0042 | 60 | 65 |
| Example 5 | Hard carbon | 95 | Sodium carboxymethyl cellulose | 4 | 0.4 | 0.0042 | 60 | 65 |
| Example 6 | Hard carbon | 95 | Sodium carboxymethyl cellulose | 10 | 0.4 | 0.0042 | 60 | 65 |
| Example 7 | Hard carbon | 95 | Sodium carboxymethyl cellulose | 15 | 0.4 | 0.0042 | 60 | 65 |
| Example 8 | Hard carbon | 95 | Sodium carboxymethyl cellulose | 8 | 0.1 | 0.0011 | 60 | 65 |
| Example 9 | Hard carbon | 95 | Sodium carboxymethyl cellulose | 8 | 0.2 | 0.0021 | 60 | 65 |
| Example 10 | Hard carbon | 95 | Sodium carboxymethyl cellulose | 8 | 1 | 0.0105 | 60 | 65 |
| Example 11 | Hard carbon | 95 | Sodium carboxymethyl cellulose | 8 | 0.6 | 0.0063 | 60 | 65 |
| Example 12 | Hard carbon | 95 | Sodium carboxymethyl cellulose | 8 | 0.4 | 0.0042 | 30 | 65 |
| Example 13 | Hard carbon | 95 | Sodium carboxymethyl cellulose | 8 | 0.4 | 0.0042 | 40 | 65 |
| Example 14 | Hard carbon | 95 | Sodium carboxymethyl cellulose | 8 | 0.4 | 0.0042 | 80 | 65 |
| Example 15 | Hard carbon | 95 | Sodium carboxymethyl cellulose | 8 | 0.4 | 0.0042 | 120 | 65 |
| Example 16 | Hard carbon | 95 | Sodium carboxymethyl cellulose | 8 | 0.4 | 0.0042 | 60 | 60 |
| Example 17 | Hard carbon | 95 | Sodium carboxymethyl cellulose | 8 | 0.4 | 0.0042 | 60 | 68 |
| Example 18 | Hard carbon | 95 | Sodium carboxymethyl cellulose | 8 | 0.4 | 0.0042 | 60 | 65 |
| Example 19 | Hard carbon | 95 | Sodium carboxymethyl cellulose | 8 | 0.4 | 0.0042 | 60 | 65 |
| Comparative Example 1 | Hard carbon | 95 | Sodium carboxymethyl cellulose | 20 | 0.4 | 0.0042 | 60 | 65 |
| Comparative Example 2 | Hard carbon | 95 | Sodium carboxymethyl cellulose | 1 | 0.4 | 0.0042 | 60 | 65 |
| Comparative Example 3 | Hard carbon | 95 | Sodium carboxymethyl cellulose | 40 | 0.4 | 0.0042 | 60 | 65 |

**Table 2**

| No. | Negative electrode slurry | | | | Non-cold-pressed negative electrode sheet | Battery | |
|---|---|---|---|---|---|---|---|
| | Gelation state after 48 hours of standing | Filtration performance (400 ml) | Bubble volume (ml/g) | Rheology | Weight loss rate of non-cold-pressed negative electrode sheet (%) | Cycling performance (cycles) | Storage performance (days) |
| Example 1 | Non-gel | < 3 min | 0 | None | 0.35% | 1400 | 680 |
| Example 2 | Non-gel | < 3 min | 0 | None | 0.34% | 1320 | 640 |
| Example 3 | Slight gelation | < 3 min | 0 | None | 0.46% | 1232 | 608 |
| Example 4 | Moderate gelation | < 3 min | 0.2 | None | 1.50% | 870 | 320 |
| Example 5 | Non-gel | < 3 min | 0.15 | None | 1.20% | 920 | 360 |
| Example 6 | Non-gel | < 3 min | 0 | None | 0.98% | 1020 | 580 |
| Example 7 | Non-gel | < 3 min | 0.2 | None | 1.10% | 895 | 340 |
| Example 8 | Moderate gelation | < 3 min | 0.22 | None | 1.50% | 866 | 311 |
| Example 9 | Slight gelation | < 3 min | 0.13 | None | 0.96% | 940 | 365 |
| Example 10 | Non-gel | < 3 min | 0 | None | 0.33% | 675 | 268 |
| Example 11 | Non-gel | < 3 min | 0 | None | 0.34% | 1030 | 598 |
| Example 12 | Non-gel | < 3 min | 0 | None | 0.96% | 980 | 587 |
| Example 13 | Non-gel | < 3 min | 0 | None | 0.84% | 1120 | 620 |
| Example 14 | Non-gel | < 3 min | 0 | None | 0.35% | 1300 | 650 |
| Example 15 | Non-gel n | < 3 min | 0 | None | 0.35% | 1030 | 602 |
| Example 16 | Non-gel | < 3 min | 0 | None | 0.69% | 1002 | 620 |
| Example 17 | Slight gelation | < 3 min | 0.15 | None | 1.30% | 870 | 560 |
| Example 18 | Moderate gelation | < 3 min | 0.7 | None | 0.67% | 830 | 305 |
| Example 19 | Moderate gelation | < 3 min | 2.2 | None | 1.40% | 802 | 270 |
| Comparative Example 1 | Severe gelation | < 3 min | 3.1 | None | 1.72% | 760 | 252 |
| Comparative Example 2 | Severe gelation | Unable to filter | 4.1 | Yes | 1.85% | 680 | 210 |
| Comparative Example 3 | Severe gelation | Unable to filter | 6.2 | Yes | 3.75% | 560 | 150 |

The negative electrode slurries in Examples 1 to 19 each included a negative electrode active material and a modifying agent coated on a surface of the negative electrode active material, where the negative electrode active material included hard carbon, and the modifying agent included sodium carboxymethyl cellulose having a weight average molecular weight of 20000 to 150000.

From the comparison of Examples 1, 4 to 7, 12 to 15 with Comparative Example 3, it can be seen that introducing the sodium carboxymethyl cellulose modifying agent in the present application is beneficial for alleviating the gelation of the negative electrode slurry after standing at 25°C for 48 h, reducing the volume of bubbles in the negative electrode slurry and the weight loss rate of the non-cold-pressed negative electrode sheet, improving the filtration performance of the negative electrode slurry, and improving the cycling performance and storage performance of the sodium secondary battery.

From the comparison of Examples 1, 4 to 7, 12 to 15 with Comparative Examples 1 to 2, it can be seen that controlling the weight average molecular weight of sodium carboxymethyl cellulose in the modifying agent to be 20000 to 150000 is beneficial for mitigating the gelation of the negative electrode slurry after standing at 25°C for 48 h, reducing the volume of bubbles in the negative electrode slurry and the weight loss rate of the non-cold-pressed negative electrode sheet, and improving the cycling performance and storage performance of the sodium secondary battery.

From Examples 1 to 3, 8 to 11, it can be seen that controlling the mass ratio of the modifying agent to the negative electrode active material to be 0.001 to 0.011 mitigates the gelation of the negative electrode slurry after standing at 25°C for 48 h, reduces the volume of bubbles in the negative electrode slurry and the weight loss rate of the non-cold-pressed negative electrode sheet, so that the sodium secondary battery has excellent cycling performance and storage performance. From the comparison of Examples 1 to 3, 9, 11 with Examples 8, 10, it can be seen that further controlling the mass ratio of the modifying agent to the negative electrode active material to be 0.002 to 0.0065 is beneficial for further improving the cycling performance and storage performance of the sodium secondary battery.

From Examples 1 to 3, it can be seen that, based on the total mass of solids in the negative electrode slurry, controlling the mass content of the negative electrode active material to be 92% to 97% mitigates the gelation of the negative electrode slurry after standing at 25°C for 48 h, reduces the volume of bubbles in the negative electrode slurry and the weight loss rate of the non-cold-pressed negative electrode sheet, so that the sodium secondary battery has excellent cycling performance and storage performance. From the comparison of Examples 1 to 2 with Example 3, it can be seen that, based on the total mass of solids in the negative electrode slurry, further controlling the mass content of the negative electrode active material to be 92% to 95% is beneficial for further mitigating the gelation of the negative electrode slurry after standing at 25°C for 48 h, reducing the weight loss rate of the non-cold-pressed negative electrode sheet, and improving the cycling performance and storage performance of the sodium secondary battery.

From the comparison of Examples 1, 5 to 6 with Examples 4, 7, it can be seen that controlling the weight average molecular weight of sodium carboxymethyl cellulose in the modifying agent to be 40000 to 100000 is beneficial for further reducing the volume of bubbles in the negative electrode slurry and improving the cycling performance and storage performance of the sodium secondary battery.

From Examples 1, 8 to 11, it can be seen that, based on the total mass of solids in the negative electrode slurry, controlling the mass content of the modifying agent to be 0.1% to 1% mitigates the gelation of the negative electrode slurry after standing at 25°C for 48 h, reduces the volume of bubbles in the negative electrode slurry and the weight loss rate of the non-cold-pressed negative electrode sheet, so that the sodium secondary battery has excellent cycling performance and storage performance. From the comparison of Examples 1, 9, 11 with Examples 8, 10, it can be seen that, based on the total mass of solids in the negative electrode slurry, further controlling the mass content of the modifying agent to be 0.2% to 0.6% is beneficial for further improving the cycling performance and storage performance of the sodium secondary battery.

From Examples 1, 12 to 15, it can be seen that controlling the kneading time in the adhesive mixture to be 30 min to 120 min mitigates the gelation of the negative electrode slurry after standing at 25°C for 48 h, reduces the volume of bubbles in the negative electrode slurry and the weight loss rate of the non-cold-pressed negative electrode sheet, so that the sodium secondary battery has excellent cycling performance and storage performance. From the comparison of Examples 1, 13 to 14 with Examples 12, 15, it can be seen that controlling the kneading time in the adhesive mixture to be 40 min to 80 min is beneficial for further improving the cycling performance and storage performance of the sodium secondary battery.

From Examples 1, 16 to 17, it can be seen that controlling the solid content of the adhesive mixture to be 60% to 68% mitigates the gelation of the negative electrode slurry after standing at 25°C for 48 h, reduces the volume of bubbles in the negative electrode slurry and the weight loss rate of the non-cold-pressed negative electrode sheet, so that the sodium secondary battery has excellent cycling performance and storage performance. From the comparison of Examples 1, 16 with Example 17, it can be seen that further controlling the solid content of the adhesive mixture to be 60% to 65% is beneficial for further mitigating the gelation of the negative electrode slurry after standing at 25°C for 48 h, reducing the weight loss rate of the non-cold-pressed negative electrode sheet, and improving the cycling performance and storage performance of the sodium secondary battery.

From Examples 1, 18, 19, it can be seen that the negative electrode slurry prepared by a one-step preparation method, a two-step preparation method, or a four-step preparation method may mitigate the gelation of the negative electrode slurry after standing at 25°C for 48 h, reduce the volume of bubbles in the negative electrode slurry and the weight loss rate of the non-cold-pressed negative electrode sheet, so that the sodium secondary battery has excellent cycling performance and storage performance. From the comparison of Examples 1, 18 with Example 19, it can be seen that for the negative electrode slurry, compared with the one-step preparation method, the two-step preparation method or the four-step preparation method is more beneficial for reducing the volume of bubbles in the negative electrode slurry and the weight loss rate of the non-cold-pressed negative electrode sheet, so that the sodium secondary battery has excellent cycling performance and storage performance.

It should be noted that the present application is not limited to the above embodiments. The above embodiments are merely examples, and embodiments having substantially the same constructions and the same effects as the technical idea within the scope of the technical solutions of the present application are all included in the technical scope of the present application. In addition, without departing from the essence of the present application, various modifications made to the embodiments that can be conceived by persons skilled in the art, and other manners constructed by combining some of the constituent elements in the embodiments are also included in the scope of the present application.

## Claims

1. A negative electrode slurry for a sodium secondary battery, **characterized by** comprising a negative electrode active material and a modifying agent coated on a surface of the negative electrode active material, wherein the negative electrode active material comprises one or more of hard carbon and hard carbon-coated graphite, and the modifying agent comprises a carboxymethyl cellulose salt having a weight average molecular weight of 20000 to 150000.

2. The negative electrode slurry according to claim 1, **characterized in that** the modifying agent comprises a carboxymethyl cellulose salt having a weight average molecular weight of 40000 to 100000.

3. The negative electrode slurry according to claim 1 or 2, **characterized in that** the carboxymethyl cellulose salt comprises one or more of lithium carboxymethyl cellulose, sodium carboxymethyl cellulose, potassium carboxymethyl cellulose, rubidium carboxymethyl cellulose, and cesium carboxymethyl cellulose.

4. The negative electrode slurry according to any one of claims 1 to 3, **characterized in that** a mass ratio of the modifying agent to the negative electrode active material is 0.001 to 0.011.

5. The negative electrode slurry according to any one of claims 1 to 4, **characterized in that** the mass ratio of the modifying agent to the negative electrode active material is 0.002 to 0.0065.

6. The negative electrode slurry according to any one of claims 1 to 5, **characterized in that** based on a total mass of solids in the negative electrode slurry, a mass content of the modifying agent is 0.1% to 1%.

7. The negative electrode slurry according to any one of claims 1 to 6, **characterized in that** based on the total mass of solids in the negative electrode slurry, the mass content of the modifying agent is 0.2% to 0.6%.

8. The negative electrode slurry according to any one of claims 1 to 7, **characterized in that** based on the total mass of solids in the negative electrode slurry, a mass content of the negative electrode active material is 92% to 97%.

9. The negative electrode slurry according to any one of claims 1 to 8, **characterized in that** based on the total mass of solids in the negative electrode slurry, the mass content of the negative electrode active material is 92% to 95%.

10. The negative electrode slurry according to any one of claims 1 to 9, **characterized in that** a solid content of the negative electrode slurry is 45% to 55%.

11. The negative electrode slurry according to claim 10, **characterized in that** the solid content of the negative electrode slurry is 48% to 53%.

12. The negative electrode slurry according to any one of claims 1 to 11, **characterized in that** the negative electrode slurry further comprises at least one of a conductive agent, a dispersant, a binder, and a plasticizer.

13. The negative electrode slurry according to any one of claims 1 to 12, **characterized in that** a bubble volume per unit mass of hard carbon in the negative electrode slurry is not more than 2.5 ml/g.

14. The negative electrode slurry according to any one of claims 1 to 13, **characterized in that** a viscosity change of the negative electrode slurry after being placed at 25°C for 48 hours is 3000 mPa·s to 12000 mPa·s.

15. The negative electrode slurry according to any one of claims 12 to 14, **characterized in that** the conductive agent comprises one or more of Super P, Ketjenblack, acetylene black, carbon nanotubes, and graphene.

16. The negative electrode slurry according to any one of claims 12 to 15, **characterized in that** the conductive agent comprises Super P.

17. The negative electrode slurry according to any one of claims 12 to 16, **characterized in that** the dispersant comprises sodium carboxymethyl cellulose having a weight average molecular weight of 400000 to 1000000.

18. The negative electrode slurry according to any one of claims 12 to 17, **characterized in that** the binder comprises one or more of styrene-butadiene rubber, polyacrylic acid, polyacrylate, polyamide, poly(acrylonitrile-acrylate), and poly(styrene-acrylate).

19. The negative electrode slurry according to any one of claims 12 to 18, **characterized in that** the binder comprises styrene-butadiene rubber.

20. The negative electrode slurry according to any one of claims 12 to 19, **characterized in that** the plasticizer comprises 1,3-butanediol.

21. A preparation method for a negative electrode slurry, **characterized in that** the preparation method comprises:
coating a modifying agent on a surface of a negative electrode active material to obtain an adhesive mixture; and
dispersing the adhesive mixture in a solvent to prepare the negative electrode slurry; wherein
the negative electrode active material comprises one or more of hard carbon and hard carbon-coated graphite, and the modifying agent comprises a carboxymethyl cellulose salt having a weight average molecular weight of 20000 to 150000.

22. The preparation method according to claim 21, **characterized in that**
the carboxymethyl cellulose salt comprises one or more of lithium carboxymethyl cellulose, sodium carboxymethyl cellulose, potassium carboxymethyl cellulose, rubidium carboxymethyl cellulose, and cesium carboxymethyl cellulose.

23. The preparation method according to claim 21 or 22, **characterized in that** the coating the modifying agent on the surface of the negative electrode active material specifically comprises:
kneading a raw material containing the negative electrode active material with the modifying agent in a solvent to obtain the adhesive mixture.

24. The preparation method according to any one of claims 21 to 23, **characterized in that** a kneading time is 30 min to 120 min.

25. The preparation method according to any one of claims 21 to 24, **characterized in that** the kneading time is 40 min to 80 min.

26. The preparation method according to any one of claims 21 to 25, **characterized in that** a solid content of the adhesive mixture is 60% to 68%.

27. The preparation method according to any one of claims 21 to 26, **characterized in that** the solid content of the adhesive mixture is 60% to 65%.

28. The preparation method according to any one of claims 21 to 27, **characterized in that** the preparation method specifically comprises:
stirring and mixing a conductive agent, the negative electrode active material, and the modifying agent to obtain a dry mixture;
kneading the dry mixture in a solvent to obtain the adhesive mixture;
stirring and mixing the adhesive mixture, a dispersant, and a solvent to obtain a first adhesive solution; and
stirring and mixing the first adhesive solution with a plasticizer, and adding a binder and stirring uniformly to obtain the negative electrode slurry.

29. A negative electrode sheet, **characterized in that** the negative electrode sheet comprises a negative electrode active material and a modifying agent coated on a surface of the negative electrode active material, wherein the negative electrode active material comprises one or more of hard carbon and hard carbon-coated graphite, and the modifying agent comprises a carboxymethyl cellulose salt having a weight average molecular weight of 20000 to 150000.

30. The negative electrode sheet according to claim 29, **characterized in that** the carboxymethyl cellulose salt comprises one or more of lithium carboxymethyl cellulose, sodium carboxymethyl cellulose, potassium carboxymethyl cellulose, rubidium carboxymethyl cellulose, and cesium carboxymethyl cellulose.

31. A sodium secondary battery, **characterized by** comprising the negative electrode sheet according to claim 29 or 30, or comprising a negative electrode sheet prepared using the negative electrode slurry according to any one of claims 1 to 20 or the negative electrode slurry prepared by the preparation method according to any one of claims 21 to 28.

32. An electric device, **characterized by** comprising the sodium secondary battery according to claim 31.
